# EUROPÄISCHE PATENTSCHRIFT

(11) **EP 4 168 768 B1**
(45) Veröffentlichungstag und Bekanntmachung des Hinweises auf die Patenterteilung: **27.09.2023**
(21) Anmeldenummer: 21755349.4
(22) Anmeldetag: 22.07.2021
(51) Int. Cl.: G01M 17/007, B60W 50/00, B62D 6/00, G01M 17/06

(54) **VERFAHREN UND SYSTEM ZUM ANALYSIEREN EINES FAHRDYNAMISCHEN FAHRVERHALTENS EINES FAHRZEUGS**
METHOD AND SYSTEM FOR ANALYSING DYNAMIC DRIVING CHARACTERISTICS OF A VEHICLE
PROCÉDÉ ET SYSTÈME D'ANALYSE DE CARACTÉRISTIQUES DE CONDUITE DYNAMIQUE D'UN VÉHICULE

(30) Priorität: 24.07.2020 AT 506352020
(43) Veröffentlichungstag der Anmeldung: 26.04.2023
(73) Patentinhaber: AVL List GmbH, 8020 Graz (AT)
(72) Erfinder: SCHUSTER, Werner, 8530 Deutschlandsberg (AT); ECKER, Joachim, 8151 Bartholomä (AT)
(86) Internationale Anmeldenummer: PCT/AT2021/060257
(87) Internationale Veröffentlichungsnummer: WO 2022/016205

(56) Entgegenhaltungen:
- EP-A1- 0 943 514
- DE-A1- 19 515 061
- DE-A1-102004 035 004
- US-A- 4 969 212

## Beschreibung

Die Erfindung betrifft ein computer-gestütztes Verfahren zum Analysieren und/oder Optimieren eines fahrdynamischen Fahrverhaltens eines zu testenden Fahrzeugs, wobei auf der Grundlage eines Testbetriebs des zu testenden Fahrzeugs eine Trajektorie sowie eine Bahngeschwindigkeit des zu testenden Fahrzeugs, insbesondere eines Schwerpunkts des zu testenden Fahrzeugs, ermittelt wird.

Aus dem Stand der Technik ist es bekannt, das fahrdynamische Fahrverhalten von Fahrzeugen auf Basis physikalischer Größen zu analysieren. So offenbart beispielsweise das Dokument EP 0 846 945 A1 ein Verfahren zur Analyse des Fahrverhaltens von Kraftfahrzeugen mit folgenden Schritten:
Durchführen von Messungen an einem realen Fahrzeug zur Gewinnung von Messgrößen über das Fahrverhalten;
laufende Überprüfung, ob vorbestimmte Triggerbedingungen, d. h. Konstellationen von Messgrößen, erfüllt sind, die vorbestimmten Fahrzuständen des Kraftfahrzeugs entsprechen;
nur dann, wenn eine der Triggerbedingungen erfüllt ist, Berechnen mindestens einer Bewertungsgröße, die die Fahrbarkeit des Fahrzeugs ausdrückt aus einer oder mehreren Messgrößen aufgrund einer vorbestimmten von der Triggerbedingung abhängigen Funktion; und
Ausgeben der Bewertungsgröße.

Die Berechnung von der Bewertungsgröße wird im Stand der Technik im Allgemeinen mittels zwei- oder mehrdimensionaler Lookup-Tabellen durchgeführt. Diese Lookup-Tabellen werden im Allgemeinen aufwandsbedingt lediglich für einen idealen Soll-Fahrstil eines Testfahrers abgebildet. Beispielsweise sollte im Rahmen des gewünschten Soll-Fahrstils bei einem Spurwechsel vorzugsweise eine möglichst sanfte Lenkradaktuierung, möglichst ohne Gegenlenken, gefahren werden. Beim Sinuslenken sollte vorzugsweise mit konstanter Lenkfrequenz und gleichbleibender Lenkradamplitude gefahren werden.

Um eine Analyse unabhängig vom Fahrstil von Versuchsfahrern zu machen, ist es im Allgemeinen notwendig, eine Vielzahl von Testbetrieben bzw. Testfahrten durchzuführen, um das Ergebnis unabhängig vom Fahrstil des Versuchsfahrers zu machen.

Ein Verfahren zum Abgleich des von einem Fahrer subjektiv wahrgenommenen Fahrverhaltens, insbesondere des Unter- und Übersteuerns, zu den objektiv gemessenen Größen der jeweiligen Fahrzeug/Reifen Kombination ist aus US 4,969,212 A bekannt.

Verfahren zur Verbesserung der Fahrstabilität werden in EP 0943514 A1, DE 102004035004 A1 und DE 19515061 A1 beschrieben.

Es ist eine Aufgabe der Erfindung, ein verbessertes Computer-gestütztes Verfahren und entsprechendes System zum Analysieren und/oder Optimieren eines zu testenden Fahrzeugs bereitzustellen. Insbesondere ist es eine Aufgabe der Erfindung, eine fahrstilunabhängige Analyse, Bewertung und/oder Optimierung eines zu testenden Fahrzeugs zu ermöglichen.

Diese Aufgabe wird gelöst durch das Verfahren und System gemäß den unabhängigen Ansprüchen. Vorteilhafte Ausgestaltungen werden in Unteransprüchen beansprucht.

Ein erster Aspekt der Erfindung betrifft ein Computer-gestütztes Verfahren zum Analysieren und/oder Optimieren eines zu testenden Fahrzeugs, das folgende Schritte aufweist: Ermitteln von Daten einer Trajektorie des zu testenden Fahrzeugs, insbesondere eines Schwerpunkts des zu testenden Fahrzeugs, sowie Bahngeschwindigkeiten auf der Trajektorie anhand von während eines Testbetriebs aufgezeichneten Daten des Fahrzeugs, Aufzeichnen eines Werts und/oder eines Wertverlaufs wenigstens einer zu ermittelnden physikalischen Größe, welche ein fahrdynamisches Fahrverhalten von Fahrzeugen charakterisiert,
Simulieren eines Betriebs eines Referenzfahrzeugs mittels eines Fahrzeugmodells des Referenzfahrzeugs in der Weise, dass das Referenzfahrzeug, insbesondere ein Schwerpunkt des Referenzfahrzeugs, beim Simulieren wenigstens im Wesentlichen die Trajektorie des zu testenden Fahrzeugs mit den ermittelten Bahngeschwindigkeiten beschreibt, wobei für wenigstens einen im Testbetrieb des zu testenden Fahrzeugs erhaltenen Wert der wenigstens einen zu ermittelnden physikalischen Größe ein entsprechender Wert mittels des Fahrzeugmodells durch Simulieren berechnet wird,
Vergleichen des zu testenden Fahrzeugs mit dem Referenzfahrzeug in Bezug auf die wenigstens eine zu ermittelnde physikalische Größe, und
Analysieren des fahrdynamischen Fahrverhaltens des zu testenden Fahrzeugs auf der Grundlage dieses Vergleichs und Bewerten des fahrdynamischen Fahrverhaltens des zu testenden Fahrzeugs in Bezug auf das Referenzfahrzeug.

Ein zweiter Aspekt der Erfindung betrifft ein System zum Analysieren und/oder Optimieren eines fahrdynamischen Fahrverhaltens eines zu testenden Fahrzeugs aufweisend:
Mittel zum Ermitteln einer Trajektorie des zu testenden Fahrzeugs, insbesondere eines Schwerpunkts des zu testenden Fahrzeugs, sowie Bahngeschwindigkeiten auf der Trajektorie anhand von während eines Testbetriebs aufgezeichneten Daten des zu testenden Fahrzeugs und zum Aufzeichnen eines Werts und/oder eines Wertverlaufs wenigstens einer zu ermittelnden physikalischen Größe, welche ein fahrdynamisches Fahrverhalten von Fahrzeugen charakterisiert;
Mittel zum Simulieren eines Betriebs eines Referenzfahrzeugs mittels eines Fahrzeugmodells des Referenzfahrzeugs in der Weise, dass das Referenzfahrzeug, insbesondere ein Schwerpunkt des Referenzfahrzeugs, beim Simulieren wenigstens im Wesentlichen die Trajektorie des zu testenden Fahrzeugs mit den ermittelten Bahngeschwindigkeiten beschreibt, wobei für den wenigstens einen im Testbetrieb des zu testenden Fahrzeugs erhaltenen Wert der wenigstens einen zu ermittelnden physikalischen Größe ein entsprechender Wert mittels des Fahrzeugmodells durch Simulieren berechnet wird; und
Mittel zum Vergleichen des zu testenden Fahrzeugs mit dem Referenzfahrzeug in Bezug auf die wenigstens eine zu ermittelnde physikalische Größe und zum Analysieren des fahrdynamischen Fahrverhaltens des zu testenden Fahrzeugs auf der Grundlage dieses Vergleichs und Bewerten des fahrdynamischen Fahrverhaltens des zu testenden Fahrzeugs in Bezug auf das Referenzfahrzeug.

Eine Trajektorie im Sinne der Erfindung ist eine Bahnkurve eines Fahrzeugs oder ein zeitabhängiger Verlauf des Orts in einem Bezugssystem.

Ein Testbetrieb im Sinne der Erfindung ist ein Betrieb eines realen Fahrzeugs oder eine Simulation eines Fahrzeugs, insbesondere während einer Testfahrt.

Ein fahrdynamisches Fahrverhalten im Sinne der Erfindung ist ein stationäres oder transientes fahrdynamisches Fahrverhalten.

Das Fahrverhalten im Sinne der Erfindung kennzeichnet die Reaktion des Fahrzeugs auf das Lenken des Fahrers, auf das Beschleunigen und Verzögern über Fahr- und Bremspedal, insbesondere während einer Kurvenfahrt und auf äußere Störungen.

Stationär im Sinne der Erfindung bedeutet bei gleichbleibender Geschwindigkeit und/oder gleichbleibender Querbeschleunigung und/oder gleichbleibender Gierrate und/oder gleichbleibendem Lenkradwinkel und/oder gleichbleibender Schräglaufwinkel an der Vorder- und Hinterachse.

Ein Mittel im Sinne der Erfindung kann hard- und/oder softwaretechnisch ausgebildet sein und insbesondere eine, vorzugsweise mit einem Speicher- und/oder Bussystemdaten- bzw. signalverbundene, insbesondere digitale Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere ein zu testendes Fahrzeug analysieren kann.

Die Erfindung beruht auf dem Ansatz, ein fahrdynamisches Fahrverhalten eines zu testenden Fahrzeugs zu analysieren, indem dessen Betriebsverhalten mit dem Betriebsverhalten eines Referenzfahrzeugs verglichen wird. Besonders vorteilhaft ist dies, wenn bereits bekannt ist, dass das Referenzfahrzeug in Bezug auf zu untersuchende Aspekte des fahrdynamischen Fahrverhaltens besonders positive Eigenschaften aufweist.

Die Erfindung nutzt hierfür eine modellbasierte Analyse-Methode. Hierbei wird das Referenzfahrzeug nicht in einem realen Betrieb betrieben, sondern mittels eines Fahrzeugmodells simuliert. Dies ermöglicht es, die Eigenschaften des jeweiligen Referenzfahrzeugs flexibel an die zu analysierenden Aspekte des fahrdynamischen Fahrverhaltens anzupassen. Darüber hinaus ermöglicht die Erfindung einen besonders genauen Abgleich des fahrdynamischen Fahrverhaltens des zu testenden Fahrzeugs mit dem Referenzfahrzeug, indem die Simulation des Betriebs des Referenzfahrzeugs auf der Grundlage der an dem zu testenden Fahrzeug ermittelten Trajektorie und der jeweiligen Bahngeschwindigkeit bzw. Bahngeschwindigkeiten auf der Trajektorie erfolgt.

Hierdurch kann eine fahrstilunabhängige Analyse erfolgen, in dem Sinne, dass sowohl der Testbetrieb des zu testenden Fahrzeugs als auch der Betrieb des Referenzfahrzeugs mit demselben Fahrstil generiert werden. Auf eine etwaige Korrektur der Bewertungsgröße kann mittels der Erfindung verzichtet werden. Eine solche Korrektur der Bewertungsgröße wäre notwendig, um den Fahrstil eines Versuchsfahrers dem gewünschten Soll-Fahrstil anzupassen. Beispielsweise hängt beim Sinuslenken die Fahrzeugreaktion von der Lenkfrequenz ab. Entspricht die Lenkfrequenz nicht jener des Soll-Fahrstils, ist eine Korrektur der Bewertungsgröße notwendig. Selbiges gilt beispielsweise für das transiente Untersteuerverhalten beim Spurwechsel: Je schneller eingelenkt wird, desto stärker ist das transiente Untersteuern während der Reifeneinlaufphase ausgeprägt. Eine Implementierung solcher Korrekturen wäre aufwendig und komplex. Auch auf fahrzeugklassenspezifische Lookup-Tabellen für die Berechnung von Bewertungsgrößen kann mittels der Erfindung vollständig verzichtet werden. Dies ist besonders vorteilhaft, da diese Lookup-Tabellen für jede Fahrzeugklasse einzeln definiert werden müssen. Selbiges gilt auch für die Korrekturrechnungen. Entsprechend hoch ist der Aufwand für eine neue Definition und Wartung bereits bestehender Lookup-Tabellen oder Korrekturrechnungen.

Bei dem erfindungsgemäßen Verfahren ist es von keinem Belang, wie viele Einflussfaktoren auf das Fahrzeugverhalten berücksichtigt werden müssen. Da sich das Referenzfahrzeug in der Simulation auf der gleichen Trajektorie mit der gleichen Bahngeschwindigkeit wie das zu testende Fahrzeug bewegt, können sämtliche Messgrößen des zu testenden Fahrzeugs sowie daraus berechnete physikalische Größen direkt mit den modellbasierten Referenzgrößen verglichen werden. Auf diese Weise kann das fahrdynamische Fahrverhalten des Messfahrzeugs über den gesamten Dynamikbereich exakt bewertet werden. Durch die einfache Veränderung der Modellparameter des Referenzfahrzeug-Modells lässt sich eine große Variantenvielfalt abdecken.

Vorzugsweise wird für im Testbetrieb des zu testenden Fahrzeugs erhaltene Werte der wenigstens einen zu ermittelnden physikalischen Größe, insbesondere für alle Werte, ein entsprechender Wert mittels des Fahrzeugmodells durch Simulieren berechnet. Hierdurch lassen sich die entsprechenden Werte unmittelbar vergleichen.

In einer vorteilhaften Ausgestaltung des Verfahrens berücksichtigt das Fahrzeugmodell wenigstens einen Parameter aus folgenden Parametern: Radstand, Masse, Trägheit, Achssteifigkeit Vorderachse, Achssteifigkeit Hinterachse, Roll- und/oder Nicksteifigkeit, Roll- und/oder Nickdämpfung, Schwerpunkthöhe über Fahrbahn, Achslastverteilung.

In einer weiteren vorteilhaften Ausgestaltung des Verfahrens weist das Fahrzeug ein Lenkungsmodell auf. Mittels des Lenkungsmodells kann das Lenkradwinkelverhalten sowie die Lenkmomentcharakteristik bei der Simulation berücksichtigt werden.

In einer vorteilhaften Ausgestaltung des Verfahrens berücksichtigt das Lenkungsmodell wenigstens einen der folgenden Parameter: Lenkraddurchmesser, Lenkkraftunterstützung, welche vorzugsweise lenkmoment- und fahrgeschwindigkeitsabhängig ist, Lenkungsreibung, welche vorzugsweise lenkradwinkel- und fahrgeschwindigkeitsabhängig ist, Lenkungsdämpfung, welche vorzugsweise fahrgeschwindigkeitsabhängig ist, Lenkungsträgheit, Lenkungsübersetzung, welche vorzugsweise fahrgeschwindigkeitsabhängig ist, Schräglaufwinkel-abhängiger Reifennachlauf, kinematischer Lenkungsnachlauf.

In einer weiteren vorteilhaften Ausgestaltung des Verfahrens sind der Wert oder die Werte des wenigstens einen Parameters in Abhängigkeit einer Fahrzeugklasse des Referenzfahrzeugs gewählt. Hierdurch lässt sich das Referenzfahrzeug an die Art des zu testenden Fahrzeugs anpassen.

In einer weiteren vorteilhaften Ausgestaltung des Verfahrens ist das fahrdynamische Fahrverhalten von Fahrzeugen durch wenigstens eine Eigenschaft charakterisiert, welche aus den folgenden Eigenschaften ausgewählt ist:
Ansprechverhalten, insbesondere Ansprechverzug, Untersteuerverhalten, Stabilität, Roll- und/oder Nickverhalten, Schwimmwinkelverhalten, Schräglaufwinkelverhalten der Vorderachse, Schräglaufwinkelverhalten der Hinterachse, Lenkradwinkelverhalten, Lenkradmomentverhalten, Gierratenverhalten, Querbeschleunigungsverhalten.

In einer weiteren vorteilhaften Ausgestaltung des Verfahrens ist aus den Vergleichen eine Bewertung des zu testenden Fahrzeugs ableitbar oder wird aus den Vergleichen abgeleitet. Die Bewertung bezieht sich insbesondere auf Toleranzbereiche und Abweichungen in Bezug auf das Referenzfahrzeug bzw. Werte des Referenzfahrzeugs. Des Weiteren kann zur Bewertung eine Bewertungsgröße oder eine Farbkennung ermittelt werden.

In einer weiteren vorteilhaften Ausgestaltung des Verfahrens ist die Bewertung umso besser, je größer eine Übereinstimmung in Bezug auf die wenigstens eine physikalische Größe ist.

In einer weiteren vorteilhaften Ausgestaltung des Verfahrens wird das Simulieren während eines Durchführens des Testbetriebs ausgeführt. Mittels dieser vorteilhaften Ausgestaltung kann eine Online-Analyse des zu testenden Fahrzeugs durchgeführt werden. Vorzugsweise werden die Ergebnisse des Vergleichens beim Testbetrieb berücksichtigt. Insbesondere wird der Testbetrieb entsprechend angepasst.

In einer alternativen Ausgestaltung werden die Trajektorie und die dazugehörigen Bahngeschwindigkeiten während des Testbetriebs aufgezeichnet und die Simulation wird anhand dieser aufgezeichneten Daten des Testbetriebs durchgeführt.

In einer weiteren vorteilhaften Ausgestaltung des Verfahrens hat das Fahrzeugmodell einen translatorischen Freiheitsgrad und wenigstens einen rotatorischen Freiheitsgrad in Z-Richtung des Bezugssystems, welcher das Gieren charakterisiert, in Y-Richtung des Bezugssystems, welcher das Nicken charakterisiert und/oder in X-Richtung des Bezugssystems, welcher das Rollen charakterisiert. Hierdurch lässt sich ideal auf die Bewegung eines realen Fahrzeugs anpassen.

In einer weiteren vorteilhaften Ausgestaltung des Verfahrens weist der Testbetrieb eine Messfahrt eines realen Fahrzeugs im Straßenverkehr, auf einer Teststrecke oder auf einem Prüfstand, insbesondere Antriebsstrangprüfstand auf, wobei die wenigstens eine physikalische Größe direkt gemessen und/oder von anderen physikalischen Größen abgeleitet, insbesondere simuliert wird.

Die im Vorhergehenden beschriebenen Merkmale und Vorteile in Bezug auf den ersten Aspekt der Erfindung gelten entsprechend für den zweiten Aspekt der Erfindung und umgekehrt.

Weitere Merkmale und Vorteile ergeben sich aus der Beschreibung in Zusammenhang mit den Figuren. Es zeigen wenigstens teilweise schematisch:
**Figur** 1 ein Ausführungsbeispiel eines Systems zum Analysieren und/oder Optimieren eines fahrdynamischen Fahrverhaltens;
**Figur** 2 ein Blockdiagramm eines Ausführungsbeispiels eines Computer-gestützten Verfahrens zum Analysieren und/oder Optimieren eines fahrdynamischen Fahrverhaltens eines zu testenden Fahrzeugs; und
**Figur** 3 eine Prinzipskizze zur Veranschaulichung der in einem Fahrzeugmodell verwendeten Parameter.

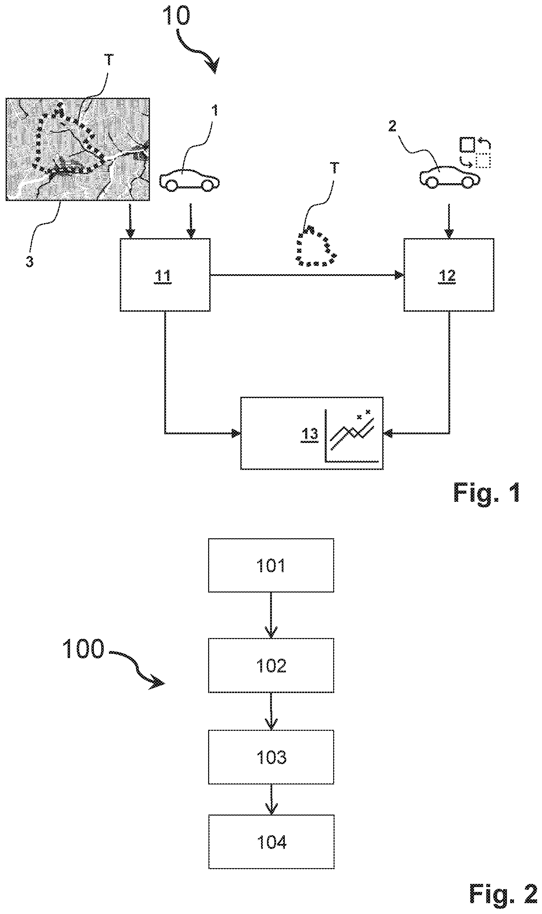

**Figur** 1 zeigt ein Ausführungsbeispiel eines Systems 10 zum Analysieren und/oder Optimieren eines fahrdynamischen Fahrverhaltens.

Mit einem zu testenden Fahrzeug 1 wird ein Testbetrieb durchgeführt, wobei vorzugsweise die Teststrecke in einem öffentlichen Verkehrsnetz 3 abgefahren wird. Hierbei legt das Fahrzeug 1 auf der Teststrecke vorzugsweise eine Trajektorie T zurück.

Diese Information wird in Mittel 11 zum Ermitteln einer Trajektorie T eingelesen oder anhand während des Testbetriebs aufgezeichneter Daten des Fahrzeugs 1 durch die Mittel 11 berechnet.

Zusätzlich zu den Mitteln 11 zum Ermitteln einer Trajektorie T weist das System 10 vorzugsweise Mittel 12 zum Simulieren eines Betriebs eines Referenzfahrzeugs 2 auf. Vorzugsweise handelt es sich bei diesen Mitteln um eine Simulationseinrichtung. Beispielsweise kommt hierfür der Vehicle Motion Observer (VMO) des Software-Werkzeugs AVL-DRIVE^{™}, welches auf einer Datenverarbeitungseinrichtung eingespielt ist, zum Einsatz.

Für die Simulation wird vorzugsweise einerseits ein Fahrzeugmodell verwendet, welchem die Eigenschaften, insbesondere Spezifikationen, des Referenzfahrzeugs 2 bereitgestellt werden. Vorzugsweise handelt es sich bei dem Referenzfahrzeug 2 um ein Fahrzeug mit derselben Hardwarekonfiguration wie das zu testende Fahrzeug 1, aber mit anderer Kalibrierung bzw. Applikation. Darüber hinaus kann es sich bei dem Referenzfahrzeug 2 auch um ein Fahrzeug derselben Fahrzeugklasse wie das zu testende Fahrzeug 1 handeln. Dies ist in Figur 1 durch die Quadrate mit Pfeilen rechts oberhalb des Referenzfahrzeugs 2 grafisch angedeutet. Letztendlich kann es sich bei dem Referenzfahrzeug 2 aber auch um ein ganz anderes Fahrzeug bzw. ein Fahrzeug einer anderen Fahrzeugklasse handeln, dessen fahrdynamisches Fahrverhalten jedoch als besonders vorteilhaft angesehen wird.

Zusätzlich zu der Konfiguration des Referenzfahrzeugs 2 wird den Mitteln 12 zum Simulieren die Trajektorie T aus dem Testbetrieb des zu testenden Fahrzeugs 1 bereitgestellt. Die Trajektorie besteht hierbei aus Daten über die Bahnkurve des Fahrzeugs und vorzugsweise über den zeitlichen Verlauf des Testbetriebs, insbesondere die Bahngeschwindigkeit des zu testenden Fahrzeugs 1 in Abhängigkeit des Ortes auf der Trajektorie T. Vorzugsweise werden zur Beschreibung der Trajektorie und der Bahngeschwindigkeit die Bahngeschwindigkeitsvektoren des Schwerpunkts SP des zu testenden Fahrzeugs an diskreten Punkten auf der Trajektorie angegeben. Alternativ kann die Trajektorie T in vorteilhafter Weise über Beschleunigungs- oder Geschwindigkeitskomponenten beschrieben werden.

Alternativ kann zur Trajektorie des Schwerpunktes SP in vorteilhafter Weise auch die Trajektorie in der Radstandsmitte verwendet werden. Die Radstandsmitte ist jener Punkt auf der Fahrzeuglängsachse bei dem die Distanz zur Vorder- und Hinterachse gleich groß ist.

Auf der Grundlage der Daten des Referenzfahrzeugs 2 und der Daten der Trajektorie T ermittelt das Fahrzeugmodell, welches in den Mitteln zur Simulation hinterlegt ist, ein fahrdynamisches Fahrverhalten des Referenzfahrzeugs 2. Hierbei wird die Simulation in der Weise ausgeführt, dass der Schwerpunkt des Referenzfahrzeugs 2 die gleiche Trajektorie wie das zu testende Fahrzeug zurücklegt. Vorzugsweise sind die Bahngeschwindigkeitsvektoren des Schwerpunkts des Referenzfahrzeugs 2 hierbei jeweils an jedem Ort der Trajektorie identisch zu den Bahngeschwindigkeitsvektoren des Schwerpunkts SP des zu testenden Fahrzeugs 1.

Sowohl von den Mitteln 11 zum Ermitteln von Daten einer Trajektorie T als auch von den Mitteln 12 zum Simulieren eines Betriebs eines Referenzfahrzeugs werden Werte bzw. Wertverläufe verschiedener physikalischer Größen in Bezug auf den Testbetrieb bzw. Betrieb der Fahrzeuge aufgezeichnet. Es wird also ein Wert und/oder ein Wertverlauf wenigstens einer zu ermittelnden physikalische Größe, welche ein fahrdynamisches Fahrverhalten von Fahrzeugen charakterisiert, aufgezeichnet.

Vorzugsweise charakterisiert die eine oder mehrere physikalische Größen eine Eigenschaft von Fahrzeugen. Eine solche Eigenschaft des Fahrzeugs kann beispielsweise das Ansprechverhalten des Fahrzeugs, insbesondere der Ansprechverzug, ein Untersteuerverhalten des Fahrzeugs, eine Stabilität des Fahrzeugs, ein Roll- und/oder Nickverhalten des Fahrzeugs, ein Schwimmwinkelverhalten, ein Schräglaufwinkelverhalten der Vorderachse des Fahrzeugs, ein Schräglaufwinkelverhalten der Hinterachse des Fahrzeugs, ein Lenkradwinkelverhalten des Fahrzeugs, ein Lenkradmomentverhalten des Fahrzeugs, ein Gierratenverhalten des Fahrzeugs und/oder ein Querbeschleunigungsverhalten des Fahrzeugs sein.

Diese Daten physikalischer Größen oder einer physikalischen Größe werden Mitteln 13 zum Vergleichen des zu testenden Fahrzeugs 1 mit dem Referenzfahrzeug 2 zugeführt, wie in Figur 1 durch die Pfeile angedeutet ist.

Diese Mittel 13 zum Vergleichen sind eingerichtet, wenigstens eine zu ermittelnde physikalische Größe, welche das fahrdynamische Fahrverhalten von Fahrzeugen charakterisiert, des Referenzfahrzeugs 2 mit den entsprechenden Werten des zu testenden Fahrzeugs 1 zu vergleichen. Auf der Grundlage dieses Vergleichs kann das zu testende Fahrzeug 1 bzw. dessen fahrdynamisches Fahrverhalten analysiert und in Bezug auf das Referenzfahrzeug 2 bewertet werden.

Auf der Grundlage dieser Analyse bzw. Bewertung kann dann in einem weiteren Arbeitsschritt durch Änderungen an der Konfiguration des zu testenden Fahrzeugs 1 eine Optimierung des zu testenden Fahrzeugs 1 vorgenommen werden.

**Figur 2** zeigt ein Blockdiagramm eines Computer-gestützten Verfahrens zum Analysieren und/oder Optimieren eines fahrdynamischen Fahrverhaltens eines zu testenden Fahrzeugs 1.

In einem ersten Arbeitsschritt 101 werden auf der Grundlage eines Testbetriebs eines zu testenden Fahrzeugs 1, insbesondere einer Testfahrt, Daten einer Trajektorie T, insbesondere eines Schwerpunkts, des zu testenden Fahrzeugs 1 gesammelt und gespeichert. Des Weiteren werden Bahngeschwindigkeiten auf der Trajektorie T gespeichert.

Auf der Grundlage dieser Daten und der Konfiguration eines Referenzfahrzeugs 2 wird der Betrieb des Referenzfahrzeugs 2 mittels eines Fahrzeugmodells des Referenzfahrzeugs 2 in der Weise simuliert 102, dass der Schwerpunkt SP des Referenzfahrzeugs 2 beim Simulieren wenigstens im Wesentlichen die an dem zu testenden Fahrzeug 1 ermittelte Trajektorie T bei den jeweils ermittelten Bahngeschwindigkeiten beschreibt.

Werte der physikalischen Größe oder Größen aus dem Testbetrieb des zu testenden Fahrzeugs 1 werden mit Werten aus der Simulation des Referenzfahrzeugs verglichen 103. Hierdurch kann eine Aussage über das zu testende Fahrzeug 1 an sich bzw. über dessen Applikationsstand getroffen werden.

Weiter vorzugsweise wird aus dem Vergleichen eine Bewertung des zu testenden Fahrzeugs 1 abgeleitet 104. Für eine solche Bewertung können in Bezug auf die Daten des Referenzfahrzeugs 2 Toleranzbereiche oder Abweichungen angegeben werden. Des Weiteren oder alternativ kann eine Bewertungsgröße in Bezug auf die Daten des Referenzfahrzeugs 2 bestimmt werden und/oder auch eine Farbkennung ermittelt werden (insbesondere grün, gelb, rot). Die Bewertung kann über eine Datenschnittstelle oder eine Benutzerschnittstelle vorzugsweise ausgegeben werden.

Weiter vorzugsweise kann in einem weiteren Arbeitsschritt (nicht dargestellt) eine Optimierung des zu testenden Fahrzeugs vorgenommen werden, indem die Hardwarekonfiguration und/oder die Kalibration bzw. Applikation des zu testenden Fahrzeugs 1 angepasst wird.

Eine Bewertung ist dabei umso besser, je größer eine Übereinstimmung in Bezug auf die wenigstens eine physikalische Größe zwischen dem zu testenden Fahrzeug 1 und dem Referenzfahrzeug 2 ist.

Der Vergleich bzw. die Bewertung kann sowohl in einem Online-Betrieb während des Ausführens des Testbetriebs des Testfahrzeugs 1 durchgeführt werden, als auch in einem Offline-Betrieb, in welchem aufgezeichnete Daten des Testbetriebs, insbesondere Daten einer Trajektorie des Testbetriebs, bewertet werden.

Wird eine Online-Auswertung vorgenommen, so können die Ergebnisse der Bewertung in den Testbetrieb des zu testenden Fahrzeugs 1 mit einfließen.

Der Testbetrieb kann dabei mittels einer Messfahrt eines realen Fahrzeugs im Straßenverkehr oder auf einem Prüfstand durchgeführt werden. Alternativ kann auch der Testbetrieb des zu testenden Fahrzeugs 1 simuliert werden. Es ist aber auch möglich, nur einzelne physikalische Größen in Bezug auf das zu testende Fahrzeug 1 zu simulieren.

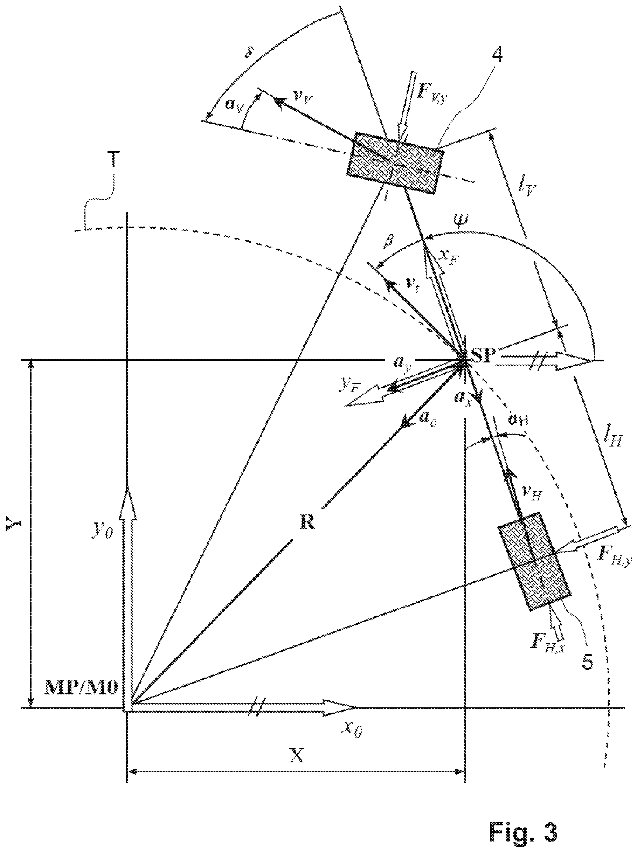

**Figur 3** zeigt eine Prinzipskizze einiger Rechengrößen und Parameter eines Fahrzeugmodells.

Das Fahrzeugmodell hat vorzugsweise einen translatorischen Freiheitsgrad und wenigstens einen rotatorischen Freiheitsgrad in Z-Richtung des Bezugssystems, welcher das Gieren charakterisiert, in Y-Richtung des Bezugssystems, welcher das Nicken eines Fahrzeugs charakterisiert und/oder in X-Richtung des Bezugssystems, welcher das Rollen des Fahrzeugs charakterisiert.

Die Räder in Fig. 3 sind mit den Bezugszeichen 4 und 5 bezeichnet, wobei 4 das Vorderrad und 5 das Hinterrad eines Fahrzeugs darstellt. In dieser vereinfachten Darstellung werden beide Vorderräder als ein Vorderrad und beide Hinterräder als ein Hinterrad betrachtet. Die Trajektorie ist in der dargestellten Situation eine Kreislinie T um den Momentanpol MP, der in Fig.3 aufgrund einer dargestellten stationären Kreisfahrt mit dem Krümmungsmittelpunkt M0 zusammenfällt, auf der sich der Schwerpunkt SP des Referenzfahrzeugs 2 bewegt. Das Fahrzeugmodell weist vorzugsweise ein gesondertes Lenkungsmodell auf, um auch den Lenkvorgang des Referenzfahrzeugs detailliert abbilden zu können.

Die gezeigten Rechengrößen und Parameter sind wie folgt:

| | |
|---|---|
| • ***aₓ*** | Längsbeschleunigung, welche im Schwerpunkt SP berechnet ist, |
| • ***a_{y}*** | Querbeschleunigung, welche im Schwerpunkt SP berechnet ist, |
| • β | Schwimmwinkel, welcher im Schwerpunkt berechnet ist, |
| • ***vₓ*** | Längsgeschwindigkeit, welche im Schwerpunkt berechnet ist, es gilt wie folgt: *̅v̅*̅ₓ̅ = *̅v̅ₜ̅*̅ · cos(β); in Figur 3 nicht dargestellt - der Vektor zeigt jedoch in Richtung der *x_{F}* Achse, |
| • X | Bahnkoordinate X des Schwerpunkts SP, |
| • Y | Bahnkoordinate Y des Schwerpunkts SP, |
| • ***aₜ*** | Tangentialbeschleunigung, im Schwerpunkt berechnet, der Betrag der Tangentialbeschleunigung ist im Fall der in Figur 3 gezeigten stationären Kreisfahrt gleich null, der Tangentialbeschleunigungsvektor zeigt in Richtung der Bahntangente im Schwerpunkt SP, |
| • ***a_{c}*** | Zentripetalbeschleunigung, im Schwerpunkt berechnet, |
| • ***vₜ*** | Bahngeschwindigkeit, im Schwerpunkt berechnet, |
| • ***v_{y}*** | Quergeschwindigkeit, im Schwerpunkt berechnet, es gilt wie folgt: *̅v̅_̅{̅y̅}̅*̅ = *̅v̅ₜ̅*̅ · sin(*β*); in Figur 3 nicht dargestellt - der Vektor zeigt jedoch in Richtung der *y_{F}* Achse, |
| • I_{V} + I_{H} | Radstand, |
| • Ψ | Gierwinkel, |
| • α_{H} | Schräglaufwinkel an der Hinterachse, |
| • α_{V} | Schräglaufwinkel an der Vorderachse, |
| • ***F_{H,x}*** | Reifenlängskraft an der Hinterachse, |
| • ***F_{H,y}*** | Reifenquerkraft an der Hinterachse, |
| • ***F_{v,y}*** | Reifenquerkraft an der Vorderachse, |
| • δ | Vorderradeinschlagwinkel, |
| • MP | Momentanpol, |
| • M0 | Krümmungsmittelpunkt, |
| • R | Bahnradius des Schwerpunkts, wobei entsprechend 1/ R die Bahnkrümmung des Schwerpunkts SP ist. |

Weitere Rechengrößen und Parameter des Fahrzeugmodells, welche nicht in Fig. 3 dargestellt sind, sind vorzugsweise: die Masse des Referenzfahrzeugs 2; die Schwerpunkthöhe des Referenzfahrzeugs 2, die Vorderachslast des Referenzfahrzeugs 2; das Massenträgheitsmoment lₓ, das Massenträgheitsmoment l_{y}, das Massenträgheitsmoment l_{z} des Referenzfahrzeugs 2; die Rollsteifigkeit, die Nicksteifigkeit, die Rolldämpfung, die Nickdämpfung des Referenzfahrzeugs 2; die Schräglaufcharakteristik der Vorderachse über Querbeschleunigung, die Schräglaufcharakteristik der Hinterachse über Querbeschleunigung des Referenzfahrzeugs 2; die Rollrate und die Nickrate und die Gierrate d/dt (Ψ) des Referenzfahrzeugs 2; der Kurswinkel Ψ + β des Referenzfahrzeugs 2; die Rollwinkelbeschleunigung und der Rollwinkel, die Nickwinkelbeschleunigung und der Nickwinkel des Referenzfahrzeugs 2; die Gierwinkelbeschleunigung d²/dt² (Ψ) des Referenzfahrzeugs 2; der Schwimmwinkel der Hinterachse und der Schwimmwinkel der Vorderachse sowie die Reifenaufstandskraft der Hinterachse und die Reifenaufstandskraft der Vorderachse des Referenzfahrzeugs 2; der Lenkraddurchmesser und der kinematische Nachlauf der Vorderachse des Referenzfahrzeugs 2; der Lenkungsreibungsgradient und die Trägheit des Lenksystems sowie die Dämpfung des Lenksystems des Referenzfahrzeugs 2, welche vorzugsweise fahrgeschwindigkeitsabhängig ist; die Lenkungsübersetzung, welche vorzugsweise fahrgeschwindigkeitsabhängig ist, der Reifennachlauf über Schräglaufwinkel, die Lenkungsreibungsamplitude des Referenzfahrzeugs 2, welche vorzugsweise lenkradwinkel- und fahrgeschwindigkeitsabhängig ist, die Lenkkraftunterstützung, welche vorzugsweise lenkmoment- und fahrgeschwindigkeitsabhängig ist.

Der Fachmann weiß jedoch, dass ein Fahrzeugmodell nicht alle diese Parameter berücksichtigen muss und kann, je nach Anwendungsfall eine geeignete Auswahl treffen sowie weitere Parameter hinzufügen.

In diesem Zusammenhang sei auch darauf hingewiesen, dass es sich bei den Ausführungsbeispielen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: zu testendes Fahrzeug
- 2: Referenzfahrzeug
- 3: öffentliches Wegenetz
- 4: Vorderrad
- 5: Hinterrad
- 10: System
- 11: Mittel zum Ermitteln einer Trajektorie
- 12: Mittel zum Simulieren eines Betriebs eines Referenzfahrzeugs
- 13: Mittel zum Vergleichen des zu testenden Fahrzeugs mit dem Referenzfahrzeug
- T: Trajektorie
- SP: Schwerpunkt
- aₓ: Längsbeschleunigung
- a_{y}: Querbeschleunigung
- β: Schwimmwinkel
- vₓ: Längsgeschwindigkeit
- v_{V}: Geschwindigkeit des Vorderrads
- v_{H}: Geschwindigkeit des Hinterrads
- X: Bahnkoordinate X des Schwerpunkts SP
- Y: Bahnkoordinate Y des Schwerpunkts SP
- aₜ: Tangentialbeschleunigung
- a_{c}: Zentripetalbeschleunigung
- vₜ: Bahngeschwindigkeit
- v_{y}: Quergeschwindigkeit
- lᵥ + l_{H}: Radstand
- Ψ: Gierwinkel
- α_{H}: Schräglaufwinkel an der Hinterachse
- α_{V}: Schräglaufwinkel an der Vorderachse
- F_{H,x}: Reifenlängskraft an der Hinterachse
- F_{H,y}: Reifenquerkraft an der Hinterachse
- F_{v,y}: Reifenquerkraft an der Vorderachse
- δ: Vorderradeinschlagwinkel
- MP: Momentanpol
- M0: Krümmungsmittelpunkt
- R: Bahnradius des Schwerpunkts

## Patentansprüche

1. Computer-gestütztes Verfahren (100) zum Analysieren und/oder Optimieren eines fahrdynamischen Fahrverhaltens eines zu testenden Fahrzeugs (1), folgende Schritte aufweisend:
Ermitteln (101) von Daten einer Trajektorie des zu testenden Fahrzeugs (1), insbesondere eines Schwerpunkts des zu testenden Fahrzeugs, sowie Bahngeschwindigkeiten auf der Trajektorie (T) anhand von während eines Testbetriebs aufgezeichneten Daten des Fahrzeugs (1),
Aufzeichnen eines Werts und/oder eines Wertverlaufs wenigstens einer zu ermittelnden physikalischen Größe, welche ein fahrdynamisches Fahrverhalten von Fahrzeugen charakterisiert,
Simulieren (102) eines Betriebs eines Referenzfahrzeugs (2) mittels eines Fahrzeugmodells des Referenzfahrzeugs (2) in der Weise, dass das Referenzfahrzeug (2), insbesondere ein Schwerpunkt (SP) des Referenzfahrzeugs (2), beim Simulieren wenigstens im Wesentlichen die Trajektorie (T) des zu testenden Fahrzeugs (1) mit den ermittelten Bahngeschwindigkeiten beschreibt, wobei für wenigstens einen im Testbetrieb des zu testenden Fahrzeugs erhaltenen Wert der wenigstens einen zu ermittelnden physikalischen Größe ein entsprechender Wert mittels des Fahrzeugmodells durch Simulieren berechnet wird,
Vergleichen (103) des zu testenden Fahrzeugs (1) mit dem Referenzfahrzeug (2) in Bezug auf die wenigstens eine zu ermittelnde physikalische Größe, und
Analysieren des fahrdynamischen Fahrverhaltens des zu testenden Fahrzeugs (1) auf der Grundlage dieses Vergleichs und Bewerten des fahrdynamischen Fahrverhaltens des zu testenden Fahrzeugs (1) in Bezug auf das Referenzfahrzeug (2).

2. Verfahren (100) nach Anspruch 1, wobei das Fahrzeugmodell des Referenzfahrzeugs (2) wenigstens einen Parameter aus den folgenden Parametern berücksichtigt:
Radstand, Masse, Trägheit, Achssteifigkeit bzw. Schräglaufwinkelverhalten der Vorderachse, Achssteifigkeit bzw. Schräglaufwinkelverhalten der Hinterachse, Roll- und/oder Nicksteifigkeit, Roll- und/oder Nickdämpfung, Schwerpunkthöhe über Fahrbahn, Achslastverteilung.

3. Verfahren (100) nach Anspruch 1 oder 2, wobei das Fahrzeugmodell des Referenzfahrzeugs (2) ein Lenkungsmodell aufweist.

4. Verfahren (100) nach Anspruch 3, wobei das Lenkungsmodell wenigstens einen Parameter aus den folgenden Parametern berücksichtigt:
Lenkraddurchmesser, Lenkkraftunterstützung, welche vorzugsweise lenkmoment- und fahrgeschwindigkeitsabhängig ist, Lenkungsreibung, welche vorzugsweise lenkradwinkel- und fahrgeschwindigkeitsabhängig ist, Lenkungsdämpfung, welche vorzugsweise fahrgeschwindigkeitsabhängig ist, Lenkungsträgheit, Lenkungsübersetzung, welche vorzugsweise fahrgeschwindigkeitsabhängig ist, Schräglaufwinkel-abhängiger Reifennachlauf, kinematischer Lenkungsnachlauf.

5. Verfahren (100) nach einem der Ansprüche 2 bis 4, wobei der Wert oder die Werte des wenigstens einen Parameters in Abhängigkeit einer Fahrzeugklasse des Referenzfahrzeugs (2) gewählt sind.

6. Verfahren (100) nach einem der vorhergehenden Ansprüche 1 bis 5, wobei das fahrdynamische Fahrverhalten von Fahrzeugen durch wenigstens eine Eigenschaft charakterisiert wird, welche aus den folgenden Eigenschaften ausgewählt ist:
Ansprechverhalten, insbesondere Ansprechverzug, Untersteuerverhalten, Stabilität, Roll- und/oder Nickverhalten, Schwimmwinkelverhalten, Schräglaufwinkelverhalten der Vorderachse, Schräglaufwinkelverhalten der Hinterachse, Lenkradwinkelverhalten, Lenkradmomentverhalten, Gierratenverhalten, Querbeschleunigungsverhalten.

7. Verfahren (100) nach einem der vorhergehenden Ansprüche 1 bis 6, wobei aus dem Vergleichen eine Bewertung des zu testenden Fahrzeugs (1) ableitbar ist oder abgeleitet wird (104), insbesondere durch Angabe von Toleranzbereichen und/oder Abweichungen und/oder Ermitteln einer Bewertungsgröße und/oder Ermitteln einer Farbkennung.

8. Verfahren (100) nach Anspruch 7, wobei die Bewertung umso besser ist, je größer eine Übereinstimmung in Bezug auf die wenigstens eine physikalische Größe zwischen dem zu testenden Fahrzeug (1) und dem Referenzfahrzeug (2) ist.

9. Verfahren (100) nach einem der vorhergehenden Ansprüche 1 bis 8, wobei das Simulieren während eines Durchführens des Testbetriebs ausgeführt wird, und vorzugsweise Ergebnisse des Vergleichens beim Testbetrieb berücksichtigt werden.

10. Verfahren (100) nach einem der vorhergehenden Ansprüche 1 bis 9, wobei das Fahrzeugmodell des Referenzfahrzeugs (2) einen translatorischen Freiheitsgrad hat und wenigstens einen rotatorischen Freiheitsgrad in Z-Richtung (Gieren), Y-Richtung (Nicken) und/oder X-Richtung (Rollen) des Bezugssystems aufweist.

11. Verfahren (100) nach einem der vorhergehenden Ansprüche 1 bis 10, wobei der Testbetrieb eine Messfahrt eines realen Fahrzeugs (1) im Straßenverkehr, auf einer Teststrecke oder auf einem Prüfstand, insbesondere Antriebsstrangprüfstand aufweist, wobei die wenigstens eine physikalische Größe direkt gemessen und/oder aus anderen physikalischen Größen abgeleitet, insbesondere simuliert, wird.

12. Computerprogramm, das Anweisungen umfasst, welche, wenn sie von einem Computer ausgeführt werden, diesen dazu veranlassen, die Schritte eines Verfahrens (100) gemäß einem der Ansprüche 1 bis 11 auszuführen.

13. Computer-lesbares Medium, auf dem ein Computerprogramm nach Anspruch 12 gespeichert ist.

14. System (10) zum Analysieren und/oder Optimieren eines fahrdynamischen Fahrverhaltens eines zu testenden Fahrzeugs (1), aufweisend:
Mittel (11) zum Ermitteln von Daten einer Trajektorie (T) des zu testenden Fahrzeugs (1), insbesondere eines Schwerpunkts des zu testenden Fahrzeugs (1), sowie Bahngeschwindigkeiten auf der Trajektorie (T) anhand von während eines Testbetriebs aufgezeichneten Daten des zu testenden Fahrzeugs (1) und zum Aufzeichnen eines Werts und/oder eines Wertverlaufs wenigstens einer zu ermittelnden physikalischen Größe, welche ein fahrdynamisches Fahrverhalten von Fahrzeugen charakterisiert;
Mittel (12) zum Simulieren eines Betriebs eines Referenzfahrzeugs (2) mittels eines Fahrzeugmodells des Referenzfahrzeugs (2) in der Weise, dass das Referenzfahrzeug (2), insbesondere ein Schwerpunkt (SP) des Referenzfahrzeugs (2), beim Simulieren wenigstens im Wesentlichen die Trajektorie (T) des zu testenden Fahrzeugs (1) mit den ermittelten Bahngeschwindigkeiten beschreibt, wobei für den wenigstens einen im Testbetrieb des zu testenden Fahrzeugs erhaltenen Wert der wenigstens einen zu ermittelnden physikalischen Größe ein entsprechender Wert mittels des Fahrzeugmodells durch Simulieren berechnet wird; und
Mittel (13) zum Vergleichen des zu testenden Fahrzeugs (1) mit dem Referenzfahrzeug (2) in Bezug auf die wenigstens eine zu ermittelnde physikalische Größe und zum Analysieren des fahrdynamischen Fahrverhaltens des zu testenden Fahrzeugs (1) auf der Grundlage dieses Vergleichs und Bewerten des fahrdynamischen Fahrverhaltens des zu testenden Fahrzeugs (1) in Bezug auf das Referenzfahrzeug (2).

## Claims

1. Computer-aided method (100) for analyzing and/or optimizing a dynamic driving behavior of a vehicle under test (1), comprising the following steps:
determining (101) data of a trajectory of the vehicle under test (1), in particular a center of gravity of the vehicle under test, as well as trajectory velocities on the trajectory (T) on the basis of data of the vehicle (1) recorded during a test operation,
recording a value and/or a value progression of at least one physical variable to be determined, which characterizes a dynamic driving behavior of a vehicle,
simulating (102) an operation of a reference vehicle (2) by means of a vehicle model of the reference vehicle (2) in such a way that the reference vehicle (2), in particular a center of gravity (SP) of the reference vehicle (2), during simulation at least substantially describes the trajectory (T) of the vehicle under test (1) with the determined path velocities, wherein for at least one value of the at least one physical variable to be determined obtained in the test operation of the vehicle under test a corresponding value is calculated by simulation by means of the vehicle model,
comparing (103) the vehicle under test (1) with the reference vehicle (2) with respect to the at least one physical variable to be determined, and
analyzing the dynamic driving behavior of the vehicle under test (1) on the basis of said comparison, and evaluating the dynamic driving behavior of the vehicle under test (1) with respect to the reference vehicle (2).

2. Method (100) according to claim 1, wherein said vehicle model of the reference vehicle (2) takes into account at least one parameter from the following parameters:
wheelbase, mass, inertia, axle stiffness or slip angle behavior of the front axle, axle stiffness or slip angle behavior of the rear axle, roll and/or pitch stiffness, roll and/or pitch damping, center of gravity height above road, axle load distribution.

3. The method (100) according to claim 1 or 2, wherein said vehicle model of the reference vehicle (2) comprises a steering model.

4. Method (100) according to claim 3, wherein said steering model takes into account at least one parameter from the following parameters:
steering wheel diameter, steering power assist, which is preferably steering torque and driving speed dependent, steering friction, which is preferably steering wheel angle and driving speed dependent, steering damping, which is preferably driving speed dependent, steering inertia, steering ratio, which is preferably driving speed dependent, slip angle dependent tyre trail, kinematic steering trail.

5. Method (100) according to any one of claims 2 to 4, wherein the value or values of the at least one parameter are selected depending on a vehicle class of said reference vehicle (2).

6. Method (100) according to any one of the preceding claims 1 to 5, wherein the dynamic driving behavior of a vehicle is **characterized by** at least one property selected from the following properties:
response behavior, in particular response delay, understeer behavior, stability, roll and/or pitch behavior, float angle behavior, front axle slip angle behavior, rear axle slip angle behavior, steering wheel angle behavior, steering wheel torque behavior, yaw rate behavior, lateral acceleration behavior.

7. Method (100) according to one of the preceding claims 1 to 6, wherein an evaluation (104) of the vehicle under test (1) can be derived or is derived from said comparison, in particular by specifying tolerance ranges and/or deviations and/or determining an evaluation variable and/or determining a color code.

8. Method (100) according to claim 7, wherein the greater a match with respect to the at least one physical variable between the vehicle under test (1) and the reference vehicle (2), the better the evaluation.

9. Method (100) according to any one of the preceding claims 1 to 8, wherein said simulating is performed while performing the test operation, and preferably results of said comparing during the test operation are taken into account.

10. Method (100) according to any one of the preceding claims 1 to 9, wherein the vehicle model of the reference vehicle (2) has a translational degree of freedom and has at least one rotational degree of freedom in the Z-direction (yaw), Y-direction (pitch) and/or X-direction (roll) of the reference system.

11. Method (100) according to one of the preceding claims 1 to 10, wherein the test operation comprises a measurement run of a real vehicle (1) in road traffic, on a test track or on a test bench, in particular a powertrain test bench, wherein the at least one physical variable is measured directly and/or derived, in particular simulated, from other physical variables.

12. A computer program comprising instructions which, when executed by a computer, cause the computer to perform the steps of a method (100) according to any one of claims 1 to 11.

13. A computer-readable medium on which is stored a computer program according to claim 12.

14. System (10) for analyzing and/or optimizing a dynamic driving behavior of a vehicle under test (1), comprising:
means (11) for determining data of a trajectory (T) of the vehicle under test (1), in particular a center of gravity of the vehicle under test (1), as well as trajectory velocities on the trajectory (T) on the basis of data of the vehicle under test (1) recorded during a test operation and for recording a value and/or a value progression of at least one physical variable to be determined, which characterizes a dynamic driving behavior of a vehicle;
means (12) for simulating an operation of a reference vehicle (2) by means of a vehicle model of the reference vehicle (2) in such a way that the reference vehicle (2), in particular a center of gravity (SP) of the reference vehicle (2), during simulation at least substantially describes the trajectory (T) of the vehicle under test (1) with the determined trajectory velocities, wherein for the at least one value of the at least one physical variable to be determined obtained in the test operation of the vehicle under test a corresponding value is calculated by simulation by means of the vehicle model; and
means (13) for comparing the vehicle under test (1) with the reference vehicle (2) with respect to the at least one physical variable to be determined, and for analyzing the dynamic driving behavior of the vehicle under test (1) on the basis of this comparison, and evaluating the dynamic driving behavior of the vehicle under test (1) with respect to the reference vehicle (2).

## Revendications

1. Procédé assisté par ordinateur (100) pour analyser et/ou optimiser un comportement de conduite dynamique d'un véhicule à tester (1), présentant les étapes suivantes :
Détermination (101) de données d'une trajectoire du véhicule à tester (1), en particulier d'un centre de gravité du véhicule à tester, ainsi que de vitesses de trajectoire sur la trajectoire (T) à l'aide de données du véhicule (1) enregistrées pendant un fonctionnement de test,
Enregistrement d'une valeur et/ou d'une évolution de valeur d'au moins une grandeur physique à déterminer, qui caractérise un comportement de conduite dynamique de véhicules,
simuler (102) un fonctionnement d'un véhicule de référence (2) au moyen d'un modèle de véhicule du véhicule de référence (2) de telle sorte que le véhicule de référence (2), en particulier un centre de gravité (SP) du véhicule de référence (2), décrit lors de la simulation au moins essentiellement la trajectoire (T) du véhicule à tester (1) avec les vitesses de trajectoire déterminées, une valeur correspondante étant calculée par simulation au moyen du modèle de véhicule pour au moins une valeur de l'au moins une grandeur physique à déterminer, obtenue lors du fonctionnement de test du véhicule à tester,
comparer (103) le véhicule (1) à tester avec le véhicule de référence (2) en ce qui concerne ladite au moins une grandeur physique à déterminer, et
analyser le comportement de conduite dynamique du véhicule à tester (1) sur la base de cette comparaison et évaluer le comportement de conduite dynamique du véhicule à tester (1) par rapport au véhicule de référence (2).

2. Procédé (100) selon la revendication 1, dans lequel le modèle de véhicule du véhicule de référence (2) prend en compte au moins un paramètre parmi les paramètres suivants :
Empattement, masse, inertie, rigidité de l'essieu ou comportement angulaire de l'essieu avant, rigidité de l'essieu ou comportement angulaire de l'essieu arrière, rigidité en roulis et/ou en tangage, amortissement en roulis et/ou en tangage, hauteur du centre de gravité par rapport à la chaussée, répartition de la charge sur les essieux.

3. Procédé (100) selon la revendication 1 ou 2, dans lequel le modèle de véhicule du véhicule de référence (2) comprend un modèle de direction.

4. Procédé (100) selon la revendication 3, dans lequel le modèle de direction prend en compte au moins un paramètre parmi les paramètres suivants:
Diamètre du volant, assistance de direction, qui dépend de préférence du couple de direction et de la vitesse de conduite, frottement de direction, qui dépend de préférence de l'angle du volant et de la vitesse de conduite, amortissement de direction, qui dépend de préférence de la vitesse de conduite, inertie de direction, rapport de direction, qui dépend de préférence de la vitesse de conduite, chasse de pneu dépendant de l'angle d'inclinaison, chasse de direction cinématique.

5. Procédé (100) selon l'une des revendications 2 à 4, dans lequel la ou les valeurs de l'au moins un paramètre sont choisies en fonction d'une classe de véhicule du véhicule de référence (2).

6. Procédé (100) selon l'une quelconque des revendications précédentes 1 à 5, dans lequel le comportement de conduite dynamique de véhicules est **caractérisé par** au moins une propriété choisie parmi les propriétés suivantes :
Comportement de réponse, en particulier retard de réponse, comportement de sous-virage, stabilité, comportement de roulis et/ou de tangage, comportement d'angle de flottement, comportement d'angle de roulis de l'essieu avant, comportement d'angle de roulis de l'essieu arrière, comportement d'angle de braquage, comportement de couple de braquage, comportement de taux de lacet, comportement d'accélération transversal.

7. Procédé (100) selon l'une des revendications précédentes 1 à 6, dans lequel une évaluation du véhicule (1) à tester peut-être déduite ou est déduite (104) de la comparaison, notamment en indiquant des plages de tolérance et/ou des écarts et/ou en déterminant une grandeur d'évaluation et/ou en déterminant un code couleur.

8. Procédé (100) selon la revendication 7, dans lequel l'évaluation est d'autant meilleure qu'il existe une correspondance en ce qui concerne ladite au moins une grandeur physique entre le véhicule (1) à tester et le véhicule de référence (2).

9. Procédé (100) selon l'une quelconque des revendications précédentes 1 à 8, dans lequel la simulation est effectuée pendant une exécution de l'opération de test, et de préférence les résultats de la comparaison sont pris en compte lors de l'opération de test.

10. Procédé (100) selon l'une quelconque des revendications précédentes 1 à 9, dans lequel le modèle de véhicule du véhicule de référence (2) a un degré de liberté en translation et présente au moins un degré de liberté en rotation dans la direction Z (lacet), dans la direction Y (tangage) et/ou dans la direction X (roulis) du système de référence.

11. Procédé (100) selon l'une des revendications précédentes 1 à 10, dans lequel le mode de test comprend un parcours de mesure d'un véhicule réel (1) en circulation routière, sur une piste d'essai ou sur un banc d'essai, notamment un banc d'essai de chaîne cinématique, l'au moins une grandeur physique étant mesurée directement et/ou déduite, notamment simulée, à partir d'autres grandeurs physiques.

12. Programme informatique comprenant des instructions qui, lorsqu'elles sont exécutées par un ordinateur, amènent ce dernier à exécuter les étapes d'un procédé (100) selon l'une quelconque des revendications 1 à 11.

13. Support lisible par ordinateur sur lequel est stocké un programme d'ordinateur selon la revendication 12.

14. Système (10) d'analyse et/ou d'optimisation d'un comportement de conduite dynamique d'un véhicule (1) à tester, comprenant :
des moyens (11) pour déterminer des données d'une trajectoire (T) du véhicule à tester (1), en particulier un centre de gravité du véhicule à tester (1), ainsi que des vitesses de trajectoire sur la trajectoire (T) à l'aide de données du véhicule à tester (1) enregistrées pendant un fonctionnement de test et pour enregistrer une valeur et/ou une évolution de valeur d'au moins une grandeur physique à déterminer, qui caractérise un comportement de conduite dynamique de véhicules;
des moyens (12) pour simuler un fonctionnement d'un véhicule de référence (2) au moyen d'un modèle de véhicule du véhicule de référence (2) de telle sorte que le véhicule de référence (2), en particulier un centre de gravité (SP) du véhicule de référence (2), décrit lors de la simulation au moins essentiellement la trajectoire (T) du véhicule à tester (1) avec les vitesses de trajectoire déterminées, une valeur correspondante étant calculée par simulation au moyen du modèle de véhicule pour l'au moins une valeur de l'au moins une grandeur physique à déterminer, obtenue lors du fonctionnement de test du véhicule à tester ; et
des moyens (13) pour comparer le véhicule à tester (1) avec le véhicule de référence (2) en ce qui concerne ladite au moins une grandeur physique à déterminer et pour analyser le comportement de conduite dynamique du véhicule à tester (1) sur la base de cette comparaison et évaluer le comportement de conduite dynamique du véhicule à tester (1) par rapport au véhicule de référence (2).
